(19) Europäisches Patentamt
European Patent Office
Office européen des brevets

(11) **EP 4 629 640 A1**

(12) **EUROPEAN PATENT APPLICATION**

(43) Date of publication:
**08.10.2025 Bulletin 2025/41**

(21) Application number: **24305523.3**

(22) Date of filing: **04.04.2024**

(51) International Patent Classification (IPC):
*H04N 21/258* (2011.01)   *G06Q 30/02* (2023.01)
*G06Q 30/0601* (2023.01)   *H04N 21/442* (2011.01)
*H04N 21/443* (2011.01)   *H04N 21/658* (2011.01)

(52) Cooperative Patent Classification (CPC):
**H04N 21/44222; G06Q 30/0242; G06Q 30/0251;
G06Q 50/26; H04N 21/25866; H04N 21/4436;
H04N 21/6582**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BLONDE, Laurent**
  **35235 THORIGNE-FOUILLARD (FR)**

• **REINHARD, Erik**
  **35630 HEDE-BAZOUGES (FR)**
• **DEMARTY, Claire-Helene**
  **35520 MONTREUIL LE GAST (FR)**
• **LE MEUR, Olivier**
  **35160 TALENSAC (FR)**
• **AUMONT, Franck**
  **35770 VERN SUR SEICHE (FR)**

(74) Representative: **Interdigital**
**Immeuble ZEN 2**
**845 A, avenue des Champs Blancs**
**35510 Cesson-Sévigné (FR)**

(54) **METHOD FOR ESTIMATING GAS EMISSION FOLLOWING CONSUMPTION OF MEDIA CONTENT AND CORRESPONDING APPARATUS**

(57)    A method is disclosed that comprises determining at least one subsequent user action taken by a user in response to consuming a media content; and obtaining, for the media content, an amount of greenhouse gas (GHG) emission based on an audience size, a proportion of a subsequent user action and an average amount of GHG emission for the subsequent user action.

<u>100</u>

**FIG. 1**

EP 4 629 640 A1

**Description**

TECHNICAL FIELD

At least one of the present embodiments generally relates to a method and an apparatus for determining a gas emissions value resulting from user actions taken subsequently to the consumption of media content, e.g., to watching a video.

BACKGROUND

As part of the mitigation of climate change, the European Commission is increasingly requiring companies to report on their (e.g., greenhouse) gas emissions, notably through the Corporate Sustainability Reporting Directive (CSRD), which implements European Sustainability Reporting Standards, developed by the EFRAG. When a broadcaster broadcasts a program, this program will be displayed on a certain number of end-user display devices. Following the display of the program, the end-users may take actions more or less detrimental for the global carbon footprint.

Having an estimate of the gas emissions linked to these actions may be advantageous, e.g., for reporting purposes.

SUMMARY

In one implementation, a method is disclosed that makes it possible to determine (e.g., estimate) a gas emission amount produced by subsequent action taken by an end-user after consuming a media content, e.g., after watching a video or listening to an audio content, or playing a game or reading a document, e.g., a textual document in a book, a multimodal document (e.g., web page) on the internet. The determined values may be used by the broadcaster for reporting purpose.

The amount of gas emission may be determined based on an audience size for this media content, a proportion of subsequent actions indicating a probability of a user taking such action, and an estimate of an average cost (in terms of gas emission) if/when the user actually takes this action.

BRIEF DESCRIPTION OF THE DRAWINGS

FIG. 1 depicts a flowchart of a method for determining an amount of gas emission produced by subsequent action(s) taken by a user after consuming media content;

FIGs 2 and 3 depict flowcharts of a method for determining an amount of gas emission produced by subsequent action(s) taken by end-user(s) after watching a video according to an example; and

FIG. 4 illustrates a block diagram of an example of a system in which various aspects and embodiments can be implemented.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. At least one of the aspects generally relates to image processing. These and other aspects can be implemented as a method, an apparatus, a computer readable storage medium having stored thereon instructions for processing video data according to any of the methods described, and/or a computer readable storage medium having stored thereon a bitstream or processed video data (e.g., reports on energy consumption) generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc. Use of such terms does not imply an ordering to the modified operations unless specifically required.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

Light production in display devices (for example, televisions, smartphones, tablets, laptops, cameras) is costly in terms of energy. This is a first aspect of displays generating greenhouse gas emissions. As part of the mitigation of climate change, the European Commission is increasingly requiring companies to report on their greenhouse gas emissions. To this end, three scopes of reporting may be defined: In a first scope (named Scope 1), direct emissions, notably caused by company facilities and company vehicles are considered. In a second scope (named Scope 2), a first type of indirect emissions is considered. These indirect emissions may be due to the purchase of electricity, steam, heating and cooling for the company's own use. In a third scope (named scope 3) a second type of indirect emissions are considered, e.g., due to emissions caused both upstream and downstream in the company's value chain.

The third scope of reporting is further broken down into a number of different classes as explained in the document from Greenhouse Gas Protocol entitled *"Corporate Value Chain (Scope 3) Accounting and Reporting Standard",* which is a supplement to the GHG Protocol Corporate Accounting and Reporting Standard. The upstream activities in Scope 3 comprise Purchased goods and services, Capital goods, Fuel- and energy-related activities not included in Scope 1 or Scope 2, Upstream transportation and distribution, Waste generated in operations, Business travel, Employee commuting, and Upstream leased assets.

The downstream activities in Scope 3 comprises Downstream transportation and distribution, Processing of sold products, Use of sold products, End-of-life treatment of sold products, Downstream leased assets, Franchises and Investments. The categories of Scope 3 relevant for broadcasters and media streaming companies are Category 1, 'purchased goods and services', and Category 11, 'use of products sold'.

When considering a broadcaster sending out a program (e.g., through digital terrestrial television (DTV)), an end user device (e.g., a television receiving the program) will use energy to display the program material. Thus, a television that uses energy to display the program will cause emissions that are considered in 'Scope 3, Cat 11 indirect use phase'. This may be estimated based on an aggregation of the amount of energy required to display a video, movie, or television program on a total number of displays receiving this content.

Beyond the physical effects of displaying the program (energy consumption), there may be consequences, in terms of gas emissions, related to this program being watched by an end-user. Indeed, when watching the program the end user / consumer may be influenced in his gas emission (e.g., carbon emission) choices. In the same way, there may be consequences, in terms of gas emissions, related to an audio program being listened to by an end-user, or a game being played or a document being read. More generally, there may be consequences, in terms of gas emissions, related to an end-user consuming media content.

As an example, travel related programs may promote travelling to far away regions and thus promote airplane transportation. Advertisement in Europe for New Zealand lamb may promote eating meat and consuming products from afar, thus needing long distance transport. Commercials for pizzas may generate cardboard waste needing recycling. Promoting e-purchasing platforms may create transport needs for the purchased goods.

More generally, any advertising to sell a good may imply gas emissions (e.g., carbon emissions) in case a user actually buys this good and, subsequently, if/when the user uses this good (e.g., transport carbon emission, disposal emission). Besides advertisement, other programs may also give rise to a purchase or use generating gas or carbon emissions. For example, an end-user may wish to buy his own piano after watching or listening to a concert or buy new sneakers after enjoying some sports sequences on TV.

These examples describe situations in which watching videos (a.k.a. image sequences) or more generally consuming media, triggers user actions more or less detrimental for the global carbon footprint. Touching a significant number of users, image sequences' impact is largely demultiplied.

Estimating the greenhouse gas (or GHG for short) emissions, linked to these actions may be advantageous, e.g., for reporting purposes.

In the following, we are therefore interested in measuring or estimating the impact of each subsequent action possibly taken by a user after watching a video or listening to an audio content, or playing a game or reading a document, e.g., textual or multimodal, e.g., on the internet. Such an impact can be measured by e.g., an amount of Carbon Dioxide.

"Carbon dioxide equivalent" or "CO2e" is a term for describing different greenhouse gases in a common unit. For any quantity and type of greenhouse gas, CO2e signifies the amount of CO2 which would have the equivalent global warming impact. A quantity of GHG can be expressed as CO2e by multiplying the amount of the GHG by its Global Warming Potential (a.k.a. GWP). For example, if 1kg of methane is emitted, this can be expressed as 29.8kg of CO2e (1kg CH4 * 29.8 = 29.8kg CO2e). The "global warming potential" (or "GWP") of a GHG indicates the amount of warming a gas causes over a given period of time (normally 100 years). GWP is an index, with CO2 having the index value of 1, and the GWP for all other GHGs is the number of times more warming they cause compared to CO2. E.g. 1kg of methane causes 29.8 times more warming over a 100-year period compared to 1kg of CO2, and so methane has a GWP of 29.8.

It is also worth noting that "CO2e" is also sometimes written as "CO2eq", "CO2equivalent", or even "CDE", and these terms can be used interchangeably.

Carbon dioxide equivalents are commonly expressed as million metric tons of carbon dioxide equivalents, abbreviated as MMTCDE.

User action consequences, like for example buying and consuming a pizza or travelling in plane, can be converted in a CO2e amount, potentially decomposing into the different subparts of the action as mentioned in Table 1.

In the following, the amount of GHG emission is not limited to the estimation or measure of Carbon Emission Equivalent. It could also be estimated or measured through the measure of energy consumption induced by an action and a correspondence between an energy value and a corresponding GHG emission. Such a correspondence may depend on the geographical location where the action takes place, it may also depend on the energy contract subscribed by the user that takes the action.

A method is thus disclosed that makes it possible to determine (e.g., estimate), based on statistics, a total amount of GHG emission, e.g., an amount of CO2e (e.g., expressed in MMTCDE or a fraction of this unit), produced by end-users as a result of watching/listening/playing/reading an ensemble of content delivered by a content provider. The method may provide the estimate to the content provider that will allow them to estimate its Scope 3, Category 11 indirect use phase emissions linked to the content presented to customers. When this content has consequences on the user's actions, actions in turn generating emissions, broadcasters can estimate these. Knowing the amount of generated GHG emissions (e.g., of CO2 equivalent emissions) linked to the media content, the content provider can share their estimated cost upstream with their business customer and, possibly, ask them the subsequent cost their promoted goods generate. The content provider may also ask their business customer to take in charge a part of the carbon cost incurred (e.g., in carbon emission equivalent).

Other use cases are not precluded, such as streaming scenarios. For example, a translation of CO2e to the quantity of greenhouse gas emissions is also provided to aid in Scope 3 reporting. Finally, the content provider may analyze post-content consumption energy costs and pass on a share (e.g., re-invoice) to the corresponding/responsible business customer.

The method allows content providers to estimate the GHG emission amount induced downstream, notably as a consequence of the end-users watching (or listening to or reading) the provided content and taking some predictable action. Such Scope 3 emission may thus be taken into account in the content providers' books. A side advantage of importance is the possibility for the content provider to reinvoice the identified GHG emission amount (e.g., a CO2e amount) to their business client, for example the advertiser or the industrial benefitting from broadcasting a video sequence, providing an audio or a document (e.g., textual, multimodal). The method may later be fed by more accurate data gathered from market or usage studies. It is envisaged also that a relative or absolute notation is used for program sequences. This will involve the development of metadata which may be proposed in standards organizations such as 3GPP, DVB and ATSC.

The content provider may know what the content of the images/audios/documents/games is, or an analysis of the content can tell it. Then, the either beneficial, neutral or harmful impact of the content in term of GHG emission (e.g., in $CO_2e$), and the statistics of people taking action (for example booking a flight after viewing a travel program) makes it possible to evaluate a carbon cost or a GHG emission (e.g., measured in $CO_2e$) associated with a content. These statistics may be available from advertising agencies (e.g., for their own promotion) or can be compiled by the content providers or by an environmental protection agency, for example.

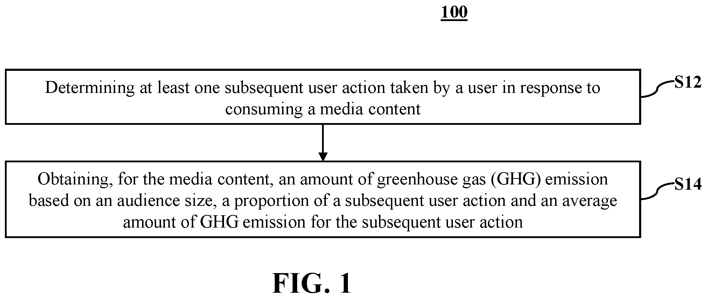

**FIG. 1** depicts a flowchart of a method 100 for determining (e.g., estimating) a value (e.g., an amount) of GHG emission (e.g., in $CO_2e$) that is produced by end-users as a result of consuming a media content according to an example.

At S12, at least one subsequent user action is determined, wherein the subsequent user action is an action taken by a user in response to consuming a media content.

At S 14, an amount of greenhouse gas (GHG) emission is obtained, for the media content, based on an audience size, a proportion of a subsequent user action and an average amount of GHG emission for the subsequent user action.

In the following the methods are described for a video content and a user watching the video. However, it may be used for an audio content (e.g., a podcast, a music, a song, etc.) and a user listening to the audio, as well as for playing a game or reading a document, e.g., textual or multimodal, e.g., on the internet. Indeed, after listening to an audio content, or after playing a game, or reading a document, the user may take actions having consequences, in terms of gas emissions. More generally, it may be used for a media content and a user consuming the media content.

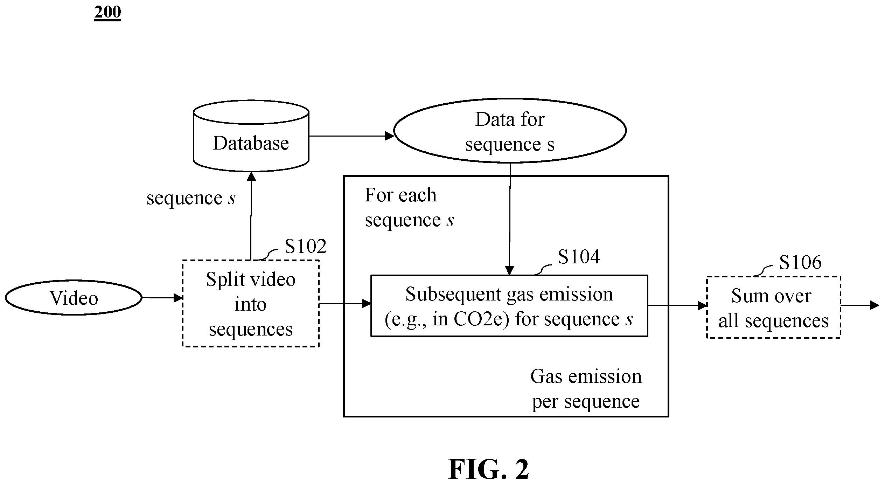

**FIG. 2** depicts a flowchart of a method 200 for determining (e.g., estimating) a value (e.g., an amount) of GHG emission (e.g., in $CO_2e$) that is produced by end-users as a result of watching a video according to an example. The method takes as input a video (e.g., movie, television program, advertisement, or any other chunk of audio-visual content).

The method may be used with video content but also with audio content, game content, or document. It may also take as input parameters related to the video content (audio content, game content, textual or multimodal content respectively) itself and a number of estimates regarding, for example, an audience size, a proportion of subsequent actions taken by users after watching each video sequence content (listening to each audio content, playing to a game, reading a document respectively), an average amount of GHG emission (e.g., in $CO_2e$) per action taken after watching the video (listening to the audio, playing to the game reading a document, respectively).

A "subsequent action" is an action done by the user (e.g., the viewer / listener / player/reader) and that results from watching the video sequence (more generally consuming the media content). A proportion of subsequent actions may be estimated because a variable number of users take the action (e.g., sometimes few, or sometimes many take the action). Actions may have an energy cost and may result in CO2 equivalent (CO2e) emission for each action.

Some of these parameters may be inferred as global statistics. In the future when better instrumentation methods and access to information databases become available, these statistics can be replaced by other information, for example collected from actual recipients of the program, or from the business clients, owners of media contents, and delivered to the content provider.

At S 102 (optional), the video may be split into sequences of homogeneous content, for instance telling a coherent story, or giving a clear message. An advertisement clip is such a coherent story or clear message. This step is optional as the video may already be a sequence of homogeneous content.

At S104, a GHG emission value, e.g., in CO2e, is obtained for each sequence based on an estimate of an audience size, a proportion of subsequent user actions and an average GHG emission value, e.g., in CO2e, per action.

At S106 (optional), the GHG emission values are summed over all sequences to obtain the total amount of GHG emissions produced by presenting the sequences to the audience as a result of a broadcast. This step only applies in the case where S 102 applies.

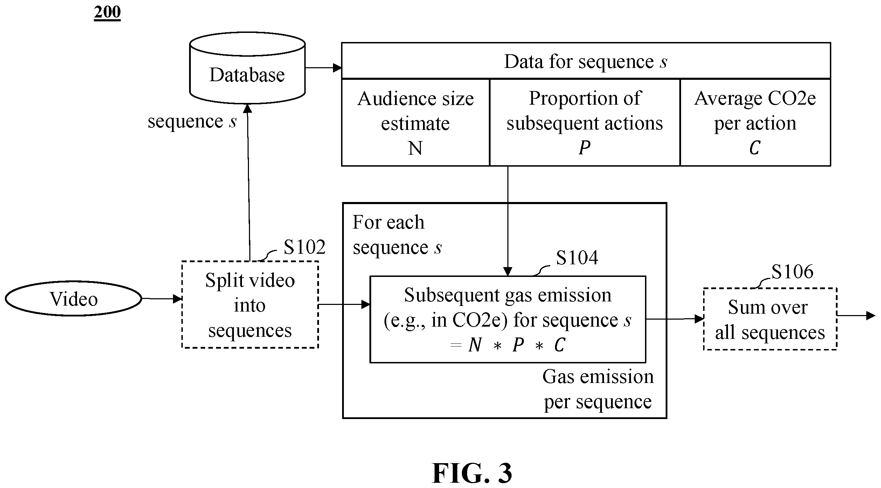

**FIG. 3** depicts a flowchart of the method 200 with more details.

At S102 (optional), the video may be split into elements of homogeneous/coherent content. Each of these video elements is named a sequence. A so called "subsequent action" is identified and linked to each sequence. What we call here a subsequent action may as well be a group of individual / different subsequent actions linked to the same sequence. For instance, a same sequence may promote buying a T-shirt (action _A) and drinking a soda (action_B). Some viewers will take (action_A), while others will take (action_B). A group of actions can be processed the same way as an individual action by aggregating their $P$ and $C$ values with adequate proportions, with $P$ and $C$ values as defined below. The method processes each sequence of the video individually, retrieving estimates.

At S104, a value (e.g., amount) of GHG emission (e.g., in carbon equivalent CO2e) induced by each sequence is computed by multiplying three factors: $CO_2e = N * P * C$, where $N$ is the audience size for this sequence, $P$ is a proportion of subsequent actions indicating a probability of the viewer taking such action, and $C$ is an estimate (e.g., in CO2e) of the average amount of GHG emission induced if/when the viewer actually takes this action.

$N$, the estimate of audience size, can be available to the broadcasters. Data can as well be provided by specialized companies such as Mediamétrie (i.e., a French company that provides marketing research services for media sectors) or other media market analysis companies.

$P$ and $C$ parameters define together a GHG emission amount (e.g., in $CO_2$ equivalent, for example expressed in MMTCDE or a fraction of this unit) estimate associated with the visualization of a given video sequence, for each person/unit of an audience. When watching a video sequence, for example promoting a product, a part of the audience will be indifferent while another part will be interested or influenced. As a consequence of this interest or influence, the viewer may take the action promoted, for example may buy a pizza, a soda, a car or a trip. Sometimes there is no direct correspondence between the promoted good and the action taken, but an indirect one (e.g., buying a Pepsi can for a promoted Coca Cola), anyway the subsequent action is accomplished, and the consequence is that GHG (e.g., $CO_2$ equivalent) is emitted. Creating and displaying the sequence remains the cause of the action, and thus the cause of GHG emissions.

The above formula for the computation of the value (e.g., amount) of GHG emission (e.g., in carbon equivalent CO2e) induced by each sequence can be easily derived for other types of media content, e.g., audio content, games, textual or multimodal content.

In case of a group of subsequent actions linked to the same sequence, the $P$ and $C$ values for the group can be computed as, for example, a weighted average of $P$ and $C$ values estimated for individual subsequent actions.

To estimate the proportion (e.g., probability) of users taking an action, marketing studies can be realized, similar to marketing studies done for advertisement. Indeed, the users taking action, buying products is exactly what the advertisement agencies expect, and they tailor their promotional contents evaluating a success factor. This success factor is used to promote their advertisement activity towards, e.g., product manufacturers. This success factor is relevant to estimate the probability users will take an action while consuming promotional media content. Data can as well be provided by specialized companies (e.g., media market analysis companies like IPSOS), by consultants or subcontractors working with the content provider.

Amount of GHG emission (e.g., in $CO_2e$ ) can be evaluated for actions associated with each media content and thus a cost can be estimated for each media content and stored in a $C$ dataset, e.g., in a database. This evaluation work can be done by a dedicated unit of the content provider, by a consultant or a subcontractor, with the possible support of a dedicated software based on content analysis / processing. This value may depend on the user's territory.

A subsequent action, linked to a media content, has consequences and generates activities in the Scope 3 context. The Scope 3 upstream activities related to taking an action can include split up categories such as Purchasing products (goods and services), fuel and energy usages related to the action, transportation, waste generated by using products, processing of acquired products, use of acquired products, end-of-life treatment of acquired products. This list is not exhaustive. For a given media content, assuming an action results from consuming this content (e.g., watching, listening to, reading, playing), each of the categories above may be given a cost in $CO_2e$. summing up into $C$, the average action cost. $C = \sum_{i=1}^{n} C_i$ , with n = 7 in the above example, and where $C_i$ is the cost for each item of the list, e.g., a positive value of $CO_2e$ (potentially zero or a negative value). In the situations where the actions taken by end-users are beneficial for the environment, C parameter, the estimate of the average cost if the user takes this action, can be a negative value (a negative cost, i.e., a gain/benefit), balancing other costs reported by the method.

Table 1: Splitting user actions into CO2e contributions of subparts

| Item | Pizza | | Travel | |
|---|---|---|---|---|
| 1. Purchasing products (goods and services) | *Purchasing pizzas* | $C_{1P} = xx$ | *Airlines services Lodging and subsistence* | $C_{1T} = xx$ |
| 2. Fuel and energy usages | *Oven heating* | $C_{2P} = xx$ | *Plane fuel* | $C_{2T} = xx$ |
| 3. Transportation | *Delivery* | $C_{3P} = xx$ | *Transport to airport, back, transports on vacation site* | $C_{3T} = xx$ |
| 4. Waste generated by using products | *Leftovers* | $C_{4P} = xx$ | *0 (part of services)* | $C_{4T} = 0$ |
| 5. Processing of acquired products | 0 | $C_{5P} = 0$ | 0 | $C_{5T} = 0$ |
| 6. Use of acquired products | *Dish washing* | $C_{6P} = xx$ | 0 | $C_{6T} = 0$ |
| 7. End-of-life treatment of acquired products | *Cardboard boxes recycling* | $C_{7P} = xx$ | 0 | $C_{7T} = 0$ |
| TOTAL | | $C_P = \sum_{i=1}^{7} C_{iP}$ | | $C_T = \sum_{i=1}^{7} C_{iT}$ |

$C_i$ values may be defined in $CO_2$ equivalent units and are not explicitly assigned in the example (i. e., *xx* are values to be estimated). Breaking down into categories applies to any type of product/service (here *Pizza* or *Travel*).

Some genericities may be exploited, and similar sequences (class of sequences) can be assigned the same *P* or *C* values.

At S106, the GHG emission values are summed over all sequences to obtain the total amount of GHG emissions produced by presenting the sequences to the audience as a result of the broadcast.

The corresponding amount of greenhouse gas emissions can be deduced from CO2e values with known formulas mentioned in document from Ecometrica entitled *"Greenhouse Gases, CO2, CO2e, and Carbon: What Do All These Terms Mean?"*.

It covers the average cost of actions taken by end-users after watching video sequences (or listening to an audio content, or playing a game or reading a textual or multimodal document), to be reported in the context of the Scope 3.

Mobile devices, phones and tablets, laptops of course have the same impact as TV screens in relation to the triggering of an action. However, the P statistics (proportion of subsequent actions) may be different, as the usage context and the audience may be different. Also, audience and context may be segmented as more information is possibly known by the operator or the app/applications. As a consequence, although they can give adequate estimates, the TV P statistics

**EP 4 629 640 A1**

can be tuned for a mobile version. Such adaptation is not mandatory though.

A point is that mobile devices include more content types than TV, as for example User Generated content (UGC). Specific tools typically based on video processing may then be necessary, for example having nearer real-time capacities for a fast reaction in building the P statistics, and potentially to identify new actions having a significant impact on GHG emission (e.g., in $CO_2e$). However, assigning responsibility of GHG emissions (e.g., in $CO_2e$) to UGC individual users is more complex, than assigning GHG emission (e.g., in $CO_2e$) to companies (or influencers) advertising products.

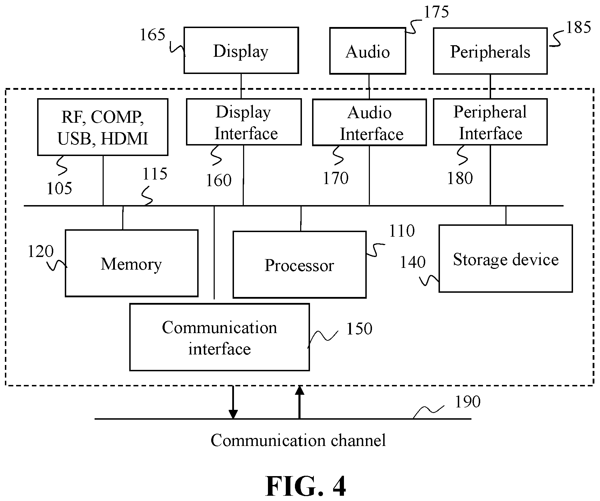

**FIG. 4** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 may optionally include a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

Program code to be loaded onto processor 110 to perform the various aspects described in this application may be stored in storage device 140 and subsequently loaded onto memory 120 for execution by processor 110. In accordance with various embodiments, one or more of processor 110, memory 120, storage device 140 may store one or more of various items during the performance of the processes described in this application. Such stored items may include, but are not limited to, the input video, frequency maps, the decoded video or portions of the decoded video, the bitstream, matrices, variables, and intermediate or final results from the processing of equations, formulas, operations, and operational logic.

In some embodiments, memory inside of the processor 110 is used to store instructions and to provide working memory for processing. In other embodiments, however, a memory external to the processing device is used for one or more of these functions. The external memory may be the memory 120 and/or the storage device 140, for example, a dynamic volatile memory and/or a non-volatile flash memory. In several embodiments, an external non-volatile flash memory is used to store the operating system of a television.

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 13, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

7

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, optionally including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

Unless indicated otherwise, or technically precluded, the aspects described in this application can be used individually or in combination.

Various numeric values are used in the present application. The specific values are for example purposes and the aspects described are not limited to these specific values.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:

    a. SDP (session description protocol), a format for describing multimedia communication sessions for the purposes of session announcement and session invitation, for example as described in RFCs and used in conjunction with RTP (Real-time Transport Protocol) transmission.

    b. DASH MPD (Media Presentation Description) Descriptors, for example as used in DASH and transmitted over HTTP, a Descriptor is associated with a Representation or collection of Representations to provide additional characteristic to the content Representation.

    c. RTP header extensions, for example as used during RTP streaming.

    d. ISO Base Media File Format, for example as used in OMAF and using boxes which are object-oriented building blocks defined by a unique type identifier and length also known as 'atoms' in some specifications.

    e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

A method comprising is disclosed that comprises:

determining at least one subsequent user action taken by a user in response to consuming a media content; and
obtaining, for the media content, an amount of greenhouse gas (GHG) emission based on an audience size, a proportion of a subsequent user action and an average amount of GHG emission for the subsequent user action.

An apparatus comprising one or more processors and at least one memory coupled to said one or more processors is disclosed. The one or more processors are configured to perform:

determining at least one subsequent user action taken by a user in response to consuming a media content; and
obtaining, for the media content, an amount of greenhouse gas (GHG) emission based on an audience size, a proportion of a subsequent user action and an average amount of GHG emission for the subsequent user action.

In an example, in response to consuming the media content comprises determining a group of combined subsequent actions taken by the user in response to consuming the media content.

In an example, the media content being a video sequence, the method comprises splitting the video sequence into subsequences and wherein determining at least one subsequent action and obtaining the amount of GHG emission are applied for each subsequence and wherein the method further comprises summing the amounts of GHG emission over all subsequences.

In an example, the proportion of a subsequent user action is a probability of a user taking such action after consuming the media content.

In an example, obtaining, for the media content, the amount of GHG emission comprises determining the amount of GHG emission as a product of the audience size, the proportion of the subsequent user action and the average amount of GHG emission for the action.

A computer program is disclosed that comprises program code instructions for implementing the method.

A non-transitory storage medium is disclosed that has stored thereon instructions for implementing the method when executed by a processor.

**Claims**

1. A method comprising:

determining at least one subsequent user action taken by a user in response to consuming a media content; and
obtaining, for the media content, an amount of greenhouse gas (GHG) emission based on an audience size, a proportion of a subsequent user action and an average amount of GHG emission for the subsequent user action.

2. The method of claim 1, wherein determining at least one subsequent action taken by a user in response to consuming the media content comprises determining a group of combined subsequent actions taken by the user in response to consuming the media content.

3. The method of claim 1 or 2, wherein, the media content being a video sequence, the method comprises splitting the video sequence into subsequences and wherein determining at least one subsequent action and obtaining the amount of GHG emission are applied for each subsequence and wherein the method further comprises summing the amounts of GHG emission over all subsequences.

4. The method of any one of claims 1 to 3, wherein the proportion of a subsequent user action is a probability of a user taking such action after consuming the media content.

5. The method of any one of claims 1 to 4, wherein obtaining, for the media content, the amount of GHG emission comprises determining the amount of GHG emission as a product of the audience size, the proportion of the subsequent user action and the average amount of GHG emission for the action.

6. An apparatus comprising one or more processors and at least one memory coupled to said one or more processors, wherein said one or more processors are configured to perform :

    determining at least one subsequent user action taken by a user in response to consuming a media content; and obtaining, for the media content, an amount of greenhouse gas (GHG) emission based on an audience size, a proportion of a subsequent user action and an average amount of GHG emission for the subsequent user action.

7. The apparatus of claim 6, wherein determining at least one subsequent action taken by a user in response to consuming the media content comprises determining a group of combined subsequent actions taken by the user in response to consuming the media content.

8. The apparatus of claim 6 or 7, wherein, the media content being a video sequence, the method comprises splitting the video sequence into subsequences and wherein determining at least one subsequent action and obtaining the amount of GHG emission are applied for each subsequence and wherein the method further comprises summing the amounts of GHG emission over all subsequences.

9. The apparatus of any one of claims 6 to 8, wherein the proportion of a subsequent user action is a probability of a user taking such action after consuming the media content.

10. The apparatus of any one of claim 6 to 9, wherein obtaining, for the media content, the amount of GHG emission comprises determining the amount of GHG emission as a product of the audience size, the proportion of the subsequent user action and the average amount of GHG emission for the action.

11. A computer program comprising program code instructions for implementing the method according to any one of claims 1-5 when executed by a processor.

12. A non-transitory storage medium having stored thereon instructions for implementing the method according to any one of claims 1-5 when executed by a processor.

**100**

| Determining at least one subsequent user action taken by a user in response to consuming a media content | ⌐S12 |

↓

| Obtaining, for the media content, an amount of greenhouse gas (GHG) emission based on an audience size, a proportion of a subsequent user action and an average amount of GHG emission for the subsequent user action | ⌐S14 |

# FIG. 1

200

Video

Split video
into
sequences

S102

sequence *s*

Database

Data for
sequence *s*

For each
sequence *s*

Subsequent gas emission
(e.g., in CO2e) for sequence *s*

S104

Gas emission
per sequence

Sum over
all sequences

S106

**FIG. 2**

**200**

**FIG. 3**

EP 4 629 640 A1

**FIG. 4**

**EP 4 629 640 A1**

<table>
<tr><td colspan="2">Europäisches Patentamt<br>European Patent Office<br>Office européen des brevets</td><td>**EUROPEAN SEARCH REPORT**</td><td>**Application Number**<br><br>EP 24 30 5523</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/281668 A1 (NURMINEN JUKKA K [FI]) 13 November 2008 (2008-11-13) * paragraphs [0041], [0052] * ----- | 1-12 | INV.<br>H04N21/258<br>G06Q30/02<br>G06Q30/0601 |
| A | US 2010/042453 A1 (SCARAMELLINO THOMAS JOSEPH [US] ET AL) 18 February 2010 (2010-02-18) * paragraphs [ 0002], [0040] * ----- | 1-12 | H04N21/442<br>H04N21/443<br>H04N21/658 |
| A | JP 2022 150704 A (ZEROBOARD INC) 7 October 2022 (2022-10-07) * the whole document * ----- | 1-12 | |
| A | US 2020/302480 A1 (BUSCH JAMES DAVID [US]) 24 September 2020 (2020-09-24) * the whole document * ----- | 1-12 | |
| | | | **TECHNICAL FIELDS SEARCHED (IPC)**<br><br>H04N<br>G06Q |

The present search report has been drawn up for all claims

| Place of search | Date of completion of the search | Examiner |
|---|---|---|
| The Hague | 21 August 2024 | Ong, Bee |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5523

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2024

| Patent document cited in search report | Publication date | Patent family member(s) | Publication date |
|---|---|---|---|
| US 2008281668 A1 | 13-11-2008 | NONE | |
| US 2010042453 A1 | 18-02-2010 | US 2010042453 A1 | 18-02-2010 |
| | | WO 2010019235 A1 | 18-02-2010 |
| JP 2022150704 A | 07-10-2022 | NONE | |
| US 2020302480 A1 | 24-09-2020 | US 2008248815 A1 | 09-10-2008 |
| | | US 2012302259 A1 | 29-11-2012 |
| | | US 2012303446 A1 | 29-11-2012 |
| | | US 2012303455 A1 | 29-11-2012 |
| | | US 2013073454 A1 | 21-03-2013 |
| | | US 2013117109 A1 | 09-05-2013 |
| | | US 2013130719 A1 | 23-05-2013 |
| | | US 2013137463 A1 | 30-05-2013 |
| | | US 2013210462 A1 | 15-08-2013 |
| | | US 2013210463 A1 | 15-08-2013 |
| | | US 2014195320 A1 | 10-07-2014 |
| | | US 2014228056 A1 | 14-08-2014 |
| | | US 2014256360 A1 | 11-09-2014 |
| | | US 2014278987 A1 | 18-09-2014 |
| | | US 2015304819 A1 | 22-10-2015 |
| | | US 2015348117 A1 | 03-12-2015 |
| | | US 2017061492 A1 | 02-03-2017 |
| | | US 2017193553 A1 | 06-07-2017 |
| | | US 2019266641 A1 | 29-08-2019 |
| | | US 2020082440 A1 | 12-03-2020 |
| | | US 2020302480 A1 | 24-09-2020 |

EPO FORM P0459

For more details about this annex : see Official Journal of the European Patent Office, No. 12/82